# EUROPÄISCHE PATENTSCHRIFT

(11) **EP 2 792 211 B1**
(45) Veröffentlichungstag und Bekanntmachung des Hinweises auf die Patenterteilung: **21.02.2018**
(21) Anmeldenummer: 12801551.8
(22) Anmeldetag: 12.12.2012
(51) Int. Cl.: H05B 3/24, F28D 1/03

(54) **ELEKTRISCH BETREIBBARES HEIZGERÄT**
ELECTRICALLY OPERABLE HEATING DEVICE
APPAREIL DE CHAUFFAGE FONCTIONNANT À L'ÉLECTRICITÉ

(30) Priorität: 15.12.2011 DE 102011088773
(43) Veröffentlichungstag der Anmeldung: 22.10.2014
(73) Patentinhaber: MAHLE Behr GmbH & Co. KG, 70469 Stuttgart (DE)
(72) Erfinder: KOHL, Michael, 74321 Bietigheim-Bissingen (DE); KRUMBACH, Karl-Gerd, 71576 Burgstetten (DE); SPRANGER, Thomas, 70619 Stuttgart (DE)
(74) Vertreter: Grauel, Andreas
(86) Internationale Anmeldenummer: PCT/EP2012/075175
(87) Internationale Veröffentlichungsnummer: WO 2013/087671

(56) Entgegenhaltungen:
- EP-A1- 0 899 985
- EP-A1- 2 642 234
- WO-A1-2012/032944
- JP-A- 2005 142 305
- US-A- 5 318 114
- US-A1- 2008 053 981
- US-A1- 2008 061 159
- US-A1- 2008 173 637

## Beschreibung

### Technisches Gebiet

Die Erfindung betrifft ein elektrisch betreibbares Heizgerät, insbesondere für Kraftfahrzeuge, nach dem Oberbegriff von Anspruch 1. Das Heizgerät ist angeordnet in einem Gehäuse und umfasst eine elektrisch betreibbare Heizvorrichtung und eine Flüssigkeitskammer zur Aufnahme und Durchströmung einer wärmeübertragenden Flüssigkeit.

### Stand der Technik

Kraftfahrzeuge mit verbrauchsarmen Verbrennungsmotoren, sogenannte "plug-in-hybrid-elektrische" Fahrzeuge (PHEF bzw. englisch abgekürzt als PHEV) mit einer Ladbarkeit der Batterie über einen Strom-Netzanschluss zusätzlich zum Laden der Batterie beim Fahren des Fahrzeugs, PHEFs mit einem sogenannten "Reichweitenverlängerer" ("Range Extender"), beispielsweise ausgebildet als ein Verbrennungsmotor für eine zusätzliche Ladung der Batterie mittels Generators, und reine Elektrofahrzeuge benötigen insbesondere für die Kabinenheizung elektrische Heiz- bzw. Zuheizsysteme. Ein Zuheizen ist vor allem in der Startphase des Fahrzeugs, insbesondere bei niedrigen Außentemperaturen erforderlich.

Für eine Erfüllung der Funktion des (Zu-)Heizens sind verschiedene technische Lösungen bekannt, beispielsweise mittels Brennstoff-(Zu-)Heizern, elektrischen (Zu-)Heizern, Abgas-Wärmeübertragung etc. Insbesondere elektrische (Zu-)Heizung erscheint als vorteilhaft, weil sie schnell wirksam wird, da elektrische Leistung sofort in spürbare Wärme umsetzbar ist. Außerdem können elektrische (Zu-)Heizvorrichtungen verhältnismäßig kostengünstig hergestellt und kompakt ausgebildet werden, so dass sie platzsparend in einem Fahrzeug untergebracht werden können.

Für Fahrzeuge mit Hybridantrieb oder rein elektrischem Antrieb sind elektrische (Zu-)Heizsysteme besonders gut geeignet. Für diese Anwendung werden elektrische Leistungen von typischerweise mehr als 3 kW benötigt, da diese Fahrzeuge einen konventionellen Kühlmittelheizkörper im Allgemeinen nicht aufweisen. Bei solchen Fahrzeugen beträgt die Bordnetzspannung typischerweise mehr als 60 V, teilweise sogar über 300 V. Aufgrund der geforderten hohen Heizleistungen am (Zu-)Heizgerät wird üblicherweise auch dieses mit der hohen Spannung betrieben, um die Stromstärke möglichst gering zu halten.

Ein solches elektrisches (Zu-)Heizgerät muss einen sicheren Berührungsschutz aufweisen, so dass eine Gefährdung im Betrieb/Wartung ausgeschlossen wird. Daher müssen alle elektrisch leitenden und von außen berührbaren Teile des elektrischen (Zu-)Heizgeräts potentialfrei ausgebildet sein. Außerdem muss die Hochspannungseinheit des elektrischen (Zu-)Heizgeräts staub- und wasserdicht gekapselt sein.

Für elektrische (Zu-)Heizgeräte sind zwei verschiedene technische Funktionsprinzipien bekannt:
- Die elektrische Leistung wird direkt in das (flüssige) Kühlmittel geleitet. Man spricht dann auch von "kühlmittelseitigen (Zu-)Heizgeräten".
- Die elektrische Leistung wird an die Luft abgegeben. Man spricht dann auch von "luftseitigen (Zu-)Heizgeräten".

Luftseitige (Zu-)Heizgeräte wirken in ihrer Heizfunktion schneller, da die elektrische Energie mit einem Wirkungsgrad von 100 % vollständig in Lufterwärmung umgesetzt wird. Ein luftseitiges (Zu-)Heizgerät ist jedoch nur zur Erwärmung eines Innenraums eines Fahrzeugs geeignet.

Außerdem ist ein luftseitiges (Zu-)Heizgerät vorteilhaft in einem Fahrzeuginnenraum, insbesondere in einem zugeordneten Klimatisierungsgerät, integriert. Eine Integration einer Hochspannungskomponente im Innenraum wird jedoch von vielen Fahrzeugherstellern als sicherheitskritisch angesehen. Insbesondere wird dabei eine örtliche Nähe von Hochspannungskomponenten zu einem kühlmittelführenden Verdampfer mit brennbaren Kühlmitteln als gefährlich und nach Möglichkeit zu vermeiden eingestuft.

Luftseitige (Zu-)Heizgeräte weisen also eine Reihe von Nachteilen auf:
- Sie ermöglichen nur die Möglichkeit, einen Innenraum zu beheizen, bieten jedoch keine Möglichkeit, eine Batterie (bei einem reinen Elektrofahrzeug) zu erwärmen bzw. zu beheizen.
- Der Raum für den Einbau eines luftseitigen (Zu-)Heizgeräts muss im Innenraum bzw. in einem Klimatisierungsgerät eines Fahrzeugs bereitgestellt werden. Sofern noch ein zusätzlicher wasserseitiger Heizkörper vorhanden ist, kann eine Integration beider Wärmeüberträger in einem Klimatisierungsgerät aus Platzgründen schwierig oder sogar unmöglich sein.
- Für ein luftseitiges (Zu-)Heizgerät bestehen erhöhte Anforderungen an die Homogenität des Temperaturprofils im Außenraum, da eine Inhomogenität sich spürbar auf die Temperaturverteilung im Innenraum auswirkt.

- Deshalb müssen bestehende Klimatisierungsgeräte für eine Integration eines luftseitigen (Zu-)Heizgeräts verändert oder neu konstruiert werden.
- Außerdem bestehen grundsätzliche Akzeptanzprobleme für eine Integration einer Hochspannungskomponente im Innenraum eines Fahrzeugs.

Kühlmittelseitige (Zu-)Heizgeräte wirken in ihrer Heizfunktion langsamer und weniger effizient, da die elektrische Energie zuerst genutzt wird, um das flüssige Kühlmittel, z.B. in einem kleinen Kühlmittelkreislauf, aufzuwärmen.

Im Folgenden wird als flüssigem Kühlmittel von Wasser gesprochen. Alle nachfolgenden Ausführungen sind aber auf ein flüssiges Kühlmittel im Allgemeinen übertragbar.

An einem separaten Wasser/Luft/Wärmeüberträger wird das erwärmte Wasser genutzt, um in die Fahrzeugkabine einströmende Luft zu erwärmen. Im Fahrzeuginnenraum ist jedoch keine Hochspannungskomponente angeordnet. Das wasserseitige (Zu-)Heizgerät kann außerdem an verschiedenen Positionen außerhalb des Innenraums angebracht werden.

Durch die Verwendung eines bekannten Wasser/Luft/Wärmeüberträgers kann ein heutzutage übliches Klimatisierungsgerät (ohne Hochspannungskomponenten) bei einer wasserseitigen Hochspannungsbeheizung nahezu unverändert übernommen und weiter verwendet werden.

Wasserseitige (Zu-)Heizgeräte weisen gegenüber luftseitigen (Zu-)Heizgeräten außerdem den Vorteil auf, dass sie geeignet sind, mittels ihres Wasserkreislaufs eine Batterie (bei einem reinen Elektrofahrzeug) aufzuwärmen bzw. zu beheizen oder abzuwärmen bzw. zu kühlen, insbesondere auch zum Speichern von Bremsenergie.

Aus dem Stand der Technik sind elektrisch betreibbare wasserseitige (Zu-)Heizgeräte für Verbrennungsmotoren (in 13 V-Ausführung) seit langem bekannt. Zusätzlich zu ihrer Niederspannungsausbildung wiesen diese Heizgeräte jedoch vergleichsweise geringe elektrische Heizleistungen, in der Größenordnung zwischen 600 W und 1500 W, auf.

In der Folge wurden wasserseitige Niederspannungs-(Zu-)Heizgeräte von luftseitigen (Zu-)Heizgeräten verdrängt.

Insbesondere seit Einführung von Fahrzeugen mit einem Hybrid- oder einem reinen Elektroantrieb ist jedoch der Bedarf nach leistungsfähigen elektrischen Heizgeräten gestiegen. Für eine Erfüllung dieses Bedarfs erscheinen insbesondere wasserseitige Hochspannungs-(Zu-)Heizgeräte geeignet und stellen daher eine wichtige technische Alternative zu luftseitigen Hochspannungs-(Zu-)Heizgeräten dar.

Aus der DE 39 07 179 ist eine elektrische Heizvorrichtung mit einem Gehäuse bekannt, in dem eine Vielzahl von PTC-Heizelementen angeordnet ist, die direkt von dem zu erwärmenden flüssigen Medium (hier Wasser) umströmt werden. Die zu den elektrischen Heizelementen führenden elektrischen Anschlusselemente liegen in dem erwärmenden Medium frei, was üblichen Sicherheitsanforderungen nicht entspricht und im Übrigen eine hohe Wahrscheinlichkeit einer Korrosion von metallischen Teilen der Anschlusselemente mit sich bringt. Diese technische Lösung erscheint daher ungeeignet.

Aus der EP 1 872 986 ist ein wasserseitiges Hochspannungs-(Zu-)Heizgerät bekannt, das einen massiven Gusskörper aufweist. Der Gusskörper ist mit U-förmigen Ausnehmungen ausgebildet, die in Flüssigkeitskammern hineinragen. In diesen Kammern sind beidseitig isolierte Heizelemente angeordnet.

Nachteilig ist das in der EP 1 872 986 vorgeschlagene wasserseitige (Zu-)Heizgerät aufgrund seiner Ausbildung mit einem massiven Gusskörper sehr schwer. Außerdem ist, bedingt durch eine relativ geringe Kontaktfläche zwischen Gusskörper und Wasser, nur ein vergleichsweise schwacher gegenseitiger Wärmeübergang möglich, was eine hohe Anzahl von Heizelementen erforderlich macht. Sofern die Heizelemente als PTC-Elemente ausgebildet sind, regeln diese wiederum, aufgrund der gegenseitigen Dichte ihrer Anordnung, die Heizleistung stark ab, was sich nachteilig auf die erzielbare Gesamtheizleistung auswirkt.

Das in der EP 1 872 986 offenbarte wasserseitige ist also aufgrund seines komplexen Aufbaus mit einem schweren Gusskörper und einer hohen Anzahl erforderlicher Heizelemente technisch unvorteilhaft und außerdem in seiner Herstellung kostenintensiv.

Die EP 2 642 234 A1 offenbart ein Heizgerät gemäß dem Oberbegriff von Anspruch 1.

### Darstellung der Erfindung, Aufgabe, Lösung, Vorteile

Es ist die Aufgabe der Erfindung, ein verbessertes wasserseitiges (Zu-)Heizgerät, insbesondere für Kraftfahrzeuge, bereitzustellen, mit dem die Nachteile der bekannten (Zu-)Heizgeräte überwunden werden. Dabei wird im Folgenden der Begriff "Heizgerät" verwendet, worin ein "Zuheizgerät" mit eingeschlossen ist.

Insbesondere ist, entsprechend einer Teilaufgabe der Erfindung, erwünscht, dass das Heizgerät als ein alleiniger Heizer für Elektrofahrzeuge und Plugin/Range Extender-Fahrzeuge und für Hochspannungsbetrieb von mehr als 60 V bis über 500 V geeignet ist. Weiterhin ist erwünscht, dass das Heizgerät Heizleistungen von 5 kW und mehr erbringen kann und modular aufgebaut ist. Das Heizgerät muss die üblichen Sicherheitsanforderungen verfüllen.

Die Aufgabe wird erfüllt mit einem elektrisch betreibbaren wasserseitigen Heizgerät mit den Merkmalen von Anspruch 1. Das Heizgerät ist angeordnet in einem Gehäuse und umfasst eine elektrisch betreibbare Heizvorrichtung und eine Flüssigkeitskammer zur Aufnahme einer wärmeübertragenden Flüssigkeit. Die Flüssigkeitskammer weist eine Vielzahl von Scheibenpaaren aus miteinander in gegenseitigen vorgegebenen Abständen verbundenen Scheiben auf, wodurch Flüssigkeitsströmungskanäle zwischen den Scheibenpaaren erzeugbar sind. Die elektrisch betreibbare Heizvorrichtung ist als ein Heizverbund mit einer Vielzahl von Heizeinheiten ausgebildet. Der Heizverbund ist zwischen den Flüssigkeitskammern anordenbar durch Einführung der Heizeinheiten in die zwischen den Scheibenpaaren erzeugten Aufnahmeräumen.

Vorteilhaft wird dadurch eine große Kontaktoberfläche für Wärmeübertragung zwischen Heizeinheiten und der wärmeübertragenden Flüssigkeit bereitgestellt.

Typischerweise sind die Heizelemente und die Flüssigkeitsströmungskanäle gegeneinander elektrisch und fluidisch dichtend isoliert.

Dadurch sind elektrische Versorgung, insbesondere mittels Hochspannung, und Kühlflüssigkeit sicher voneinander getrennt.

Erfindungsgemäß weisen die Scheiben eine Einlassöffnung und eine Auslassöffnung zur Ermöglichung einer Einströmung von wärmeübertragender Flüssigkeit in die Flüssigkeitskanäle auf und des Weiteren einen von der Einlassöffnung und der Auslassöffnung ausgehenden Trennsteg, mit einem Ende des Trennstegs, an dem durchströmende wärmeübertragende Flüssigkeit von einer Einströmungsrichtung in eine Ausströmungsrichtung umleitbar ist.

Bevorzugt sind jeweils zwei Scheiben eines Scheibenpaars miteinander verlötet.

Vorteilhaft wird dadurch eine stabile Verbindung zwischen den Scheiben eines Scheibenpaars gewährleistet.

Es wird außerdem bevorzugt, dass die Heizelemente in einem Hüllrohr angeordnet sind und mittig zwischen zwei Kontaktelektroden angeordnete PTC-Elemente aufweisen. Vorzugsweise ist dabei zwischen den Kontaktelektroden und dem Hüllrohr eine elektrische Isolation vorgesehen.

Dadurch wird vorteilhaft ermöglicht, das Heizgerät, insbesondere die Heizelemente, gefahrlos auch unter Hochspannung betreiben zu können.

Bevorzugt ist das Gehäuse aus mehreren Gehäuseteilen aufgebaut, die über Dichtungselemente staubdichtend und fluidisch dichtend miteinander verbindbar sind.

Der Aufbau aus mehreren Gehäuseteilen erleichtert einen modularen Aufbau des Heizgeräts. Durch die dichtungsvermittelte Zusammenfügung der Gehäuseteile wird ein wirksamer Schutz des Heizgeräts nach innen und nach außen (insbesondere gegen Austritt von Kühlflüssigkeit) gewährleistet.

Bevorzugt weisen die Scheiben in Bereichen ihrer Einlass- und Auslassöffnungen Scheibennäpfe auf, mittels derer in dem Heizgerät benachbart angeordnete Scheiben verschiedener Scheibenpaare gegeneinander beabstandet sind.

Dadurch wird vorteilhaft eine Zusammenfügung, insbesondere Verlötung, von Scheiben zu Scheibenpaaren zusammenzufügenden Scheiben mit gegenseitiger Beabstandung der Scheibenpaare durch bei der Zusammenfügung einführbare und danach wieder entnehmbare Einlegeteile erleichtert.

Gemäß einer Ausführungsform der Erfindung sind in dem Heizgerät benachbart angeordnete Scheiben verschiedener Scheibenpaare durch mit den Scheiben dauerhaft verbundene, insbesondere zu den Scheiben verlötete, Einlegeteile gegeneinander beabstandet.

Dadurch wird vorteilhaft die Anordnung der Scheiben und Scheibenpaare bei ihrer Zusammenfügung als Vorbereitung für die Montage in einem erfindungsgemäßen Heizgerät stabilisiert.

Für diese Ausführungsform wird bevorzugt, dass ein mit Scheiben verbundenes, insbesondere verlötetes, Einlegeteil zwei Beabstandungsrandleisten und vorzugsweise eine Mittelbeabstandungsleiste aufweist, an denen diese mit Scheiben von Scheibenpaaren zusammengefügt, insbesondere verlötet sind, so dass Einschubschächte zwischen den Beabstandungsleisten und den benachbarten Scheiben der Scheibenpaare erzeugt sind. In diese Einschubschächte, auch als Aufnahmeraum definiert.

Dadurch wird vorteilhaft die Einführung der Heizeinheiten zwischen die Scheibenpaare erleichtert.

Gemäß einer anderen Ausführungsform der Erfindung sind in dem Heizgerät benachbart angeordnete Scheiben verschiedener Scheibenpaare durch mit den Scheiben integrierte Beabstandungselemente, die aus den Scheiben durch Faltung umgeformt und, insbesondere, als Beabstandungsleisten oder Noppen ausgebildet sind, beabstandet.

Diese Ausführungsform zeichnet sich vorteilhaft dadurch aus, dass die Beabstandungselemente bzw. Beabstandungsleisten bereits bei der Fertigung der Scheiben erzeugbar sind und kein weiterer Prozessschritt zur gegenseitigen Zusammenfügung erforderlich ist.

Weitere vorteilhafte Ausgestaltungen, mit denen insbesondere auch die vorgenannten Teilaufgaben erfüllt werden, sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: ein erstes Ausführungsbeispiel eines erfindungsgemäßen elektrisch betreibbaren flüssigkeitsdurchströmten Heizgeräts in einer schematischen teilweise aufgeschnitten und in einer expandierten perspektivischen Darstellung,
- Fig. 2: eine Scheibe des Heizgeräts von Fig. 1 in einer perspektivischen Schrägansicht und in Aufsicht,
- Fig. 3: eine Stapelanordnung von zu Scheibenpaaren zusammengefügten Scheiben gemäß Fig. 2 und illustriert die Anordnung benachbarter Scheibenpaare in dem Heizgerät von Fig. 1,
- Fig.4: eine Anordnung von zu Scheibenpaaren zusammengefügten Scheiben mit gegenseitiger Beabstandung durch eine erste Vorgehensweise bei der Zusammenfügung,
- Fig. 5: eine Stapelanordnung von zu Scheibenpaaren zusammengefügten Scheiben gemäß Fig. 2, mit gegenseitiger Beabstandung durch eine zweite Vorgehensweise und illustriert die Anordnung benachbarter Scheibenpaare in dem Heizgerät von Fig. 1,
- Fig. 6: in einer Längsschnittdarstellung und einer perspektivischen expandierten Darstellung einen beispielhaften Aufbau einer Heizeinheit eines Heizverbunds für das Heizgerät von Fig.1,
- Fig. 7a: in einer Stapelanordnung und einer perspektivischen expandierten Darstellung eine Illustration für die Integration eines Heizverbunds gemäß Fig. 6 zwischen Scheibenpaaren, die bei ihrer gegenseitigen Zusammenfügung gemäß der ersten Vorgehensvariante von Fig. 4 beabstandet worden sind,
- Fig. 7b: für das Ausführungsbeispiel gemäß Fig. 7a in einer Aufsicht auf die Längsseite und in einer Schnittdarstellung dazu die Anordnung der Heizeinheiten mit Hüllrohren zwischen den Scheibenpaaren,
- Fig. 7c: Detailansichten zu Fig. 7a und Fig. 7b in zwei zueinander senkrecht orientierten Querschnittsansichten,
- Fig. 8a: in einer Stapelanordnung und einer perspektivischen expandierten Darstellung eine Illustration für die Integration eines Heizverbunds gemäß Fig. 6 zwischen Scheibenpaaren, die bei ihrer gegenseitigen Zusammenfügung gemäß der zweiten Vorgehensvariante von Fig. 5 beabstandet worden sind,
- Fig. 8b: für das Ausführungsbeispiel gemäß Fig. 8a in einer Aufsicht auf die Längsseite und in einer Schnittdarstellung dazu die Anordnung der Heizeinheiten mit Hüllrohren zwischen den Scheibenpaaren,
- Fig. 8c: Detailansichten zu Fig. 8a und Fig. 8b in zwei zueinander senkrecht orientierten Querschnittsansichten,
- Fig. 9a: in einer Stapelanordnung und einer perspektivischen expandierten Darstellung eine Illustration für die Integration eines Heizverbunds gemäß Fig. 6 zwischen Scheibenpaaren, die bei ihrer gegenseitigen Zusammenfügung gemäß einer dritten Vorgehensvariante beabstandet worden sind,
- Fig. 9b: für das Ausführungsbeispiel gemäß Fig. 9a in einer Aufsicht auf die Längsseite und in einer Schnittdarstellung dazu die Anordnung der Heizeinheiten mit Hüllrohren zwischen den Scheibenpaaren,
- Fig. 9c: Detailansichten zu Fig. 9a und Fig. 9b in zwei zueinander senkrecht orientierten Querschnittsansichten,
- Fig. 10a: in perspektivischen expandierten Ansichten eine Illustration für die Integration von Scheibenpaaren und einem Heizverbund mit Heizeinheiten in einem Gehäuse für Fertigstellung eines Heizgeräts gemäß Fig. 1, und
- Fig. 10b: in einer schematischen expandierten perspektivischen Darstellung und einer teilweise aufgeschnitten Darstellung eine Illustration für die Integration von Scheibenpaaren und einem Heizverbund mit Heizeinheiten in einem Gehäuse für Fertigstellung eines Heizgeräts gemäß Fig. 1.

### Bevorzugte Ausführung der Erfindung

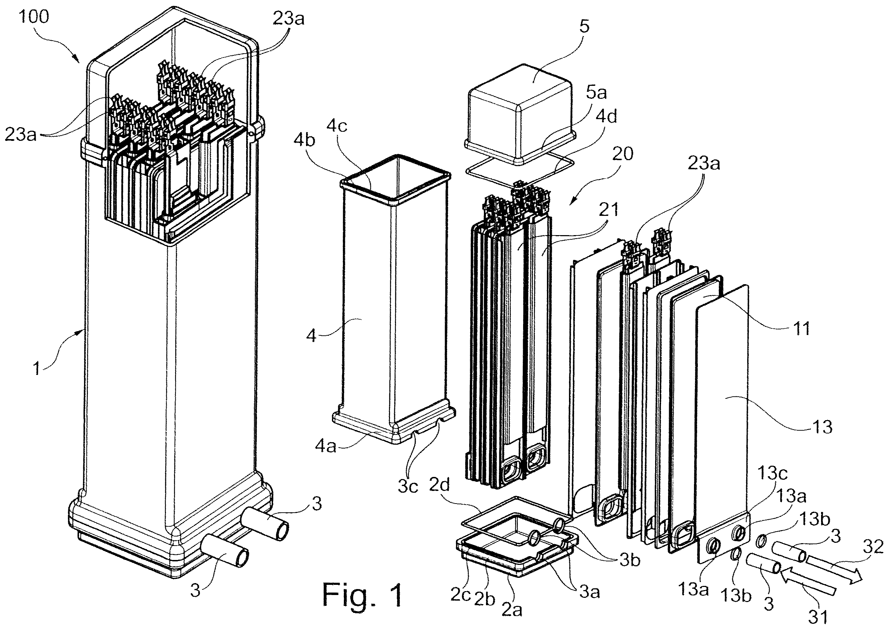

Figur 1 zeigt ein erstes Ausführungsbeispiel eines erfindungsgemäßen elektrisch betreibbaren flüssigkeitsdurchströmbaren Heizgeräts 100, das, insbesondere für Kraftfahrzeuge geeignet ist, in einer schematischen teilweise aufgeschnittenen und in einer expandierten perspektivischen Darstellung.

Das Heizgerät 100 weist ein Gehäuse 1 auf, das vorzugsweise aus Kunststoff oder Metall gefertigt ist und, in diesem Beispiel, mehrteilig als ein Hohlquader ausgebildet ist, mit einem Sockelteil 2, einem Mittelteil 4 und einem Deckelteil 5.

Das Sockelteil 2 weist in diesem Beispiel ein Basisteil 2a und ein Verbindungsteil 2b mit einer umlaufenden Nut 2c und zwei halbkreisförmig ausgebildeten Ausnehmungen 3a für eine Aufnahme von Einlass- und Auslassanschluss-Stutzen 3 zum Zuführen und Abführen eines flüssigen Mediums als Kühlflüssigkeit auf, wobei das Basisteil 2a und das Verbindungsteil 2b bevorzugt miteinander einstückig geformt und gefertigt sind. Ein komplementär zu der Nut 2c geformtes Dichtungselement 2d ist in die Nut 2c einfügbar und auf das Verbindungsteil 2b aufsetzbar, wobei das Verbindungsteil 2b zwei kreisförmig ausgebildete Durchlassringe 3b aufweist, die zu den halbkreisförmigen Ausnehmungen 3a komplementär geformt sind.

Das Mittelteil 4 weist in diesem Beispiel ein unteres Endteil 4a mit einer (nicht dargestellten) umlaufenden, zu der Form des Dichtungselements 2d komplementär ausgebildeten, Nut und zwei halbkreisförmig ausgebildete Ausnehmungen 3c für eine Aufnahme von den Einlass- und Auslassanschlussstutzen 3, vorzugsweise aus Aluminium, auf. Das Mittelteil 4 mit seinem unteren Endteil 4a ist so ausgebildet, dass es, vermittelt über das Dichtungselement 2d, dichtend mit dem Sockelteil 2 zusammenfügbar ist.

Außerdem weist das Mittelteil 4 beispielhaft ein oberes Endteil 4b mit einer umlaufenden Nut 4c auf, in die ein komplementär dazu geformtes Dichtungselement 4d einfügbar ist.

Bevorzugt ist das Mittelteil 4 mit seinem unteren Endteil 4a und seinem oberen Endteil 4b einstückig geformt und hergestellt.

Auf das Mittelteil 4 aufsetzbar ist ein Deckelteil 5 mit einem unteren Endteil 5a, das mit einer (nicht dargestellten) umlaufenden Nut versehen ist, in die das Dichtungselement 4d einfügbar ist, wodurch das Oberteil 5 mit dem Mittelteil 4 dichtend verbindbar ist.

Es wird darauf hingewiesen, dass die quaderförmige Ausbildung des Gehäuses 1 und seiner Bestandteile mit einem quadratischen oder rechteckigen Querschnitt und auch kreisförmig ausgebildeter Flüssigkeitsdurchlässe sowohl in diesem als auch noch weiter folgenden Ausführungsbeispielen rein beispielhaft ist und durch andere Querschnittsgestaltungen, beispielsweise elliptischer, polygonaler oder anderer beliebiger Art ersetzbar ist.

Figur 1 zeigt des Weiteren in der expandierten Darstellung auf der rechten Figurenseite ein für das erfindungsgemäße Heizgerät geeignet ausgebildeter Heizverbund 20 mit einer Vielzahl von Heizeinheiten 21, die an einem Ende Elektrodenanschlüsse 23a aufweisen.

In der expandierten Darstellung weiter nach rechts folgend sind Scheiben 11 zur Regelung des Kühlmittelkreislaufs mit dazwischen erzeugbaren Flüssigkeitsströmungskanälen illustriert, wobei die Scheiben 11 jeweils an einem unteren Ende Durchlassöffnungen 11a zum Durchlass von Kühlflüssigkeit in mit einer Einlassrichtung 31 und einer Auslassrichtung 32 kompatiblen Strömungsrichtung aufweisen. Die Scheiben 11 sind vorzugsweise aus Aluminium gefertigt.

Illustrativ sind außerdem zwei zwischen benachbarten Scheiben 11 eingefügte Heizeinheiten 21 und ein Seitenteil 13, vorzugsweise ebenfalls aus Aluminium, mit einem unteren Endteil 13c, zur Berandung der Scheiben 11 in einer Flüssigkeitskammer im Gehäuse 1 des Heizgeräts 100 dargestellt. Das Sockelteil 13c weist zwei komplementär zu den Durchlassöffnungen 11a der Scheiben 11 ausgebildete Durchlassöffnungen 13a auf, mit denen über Dichtungselemente 13b die Stutzen 3 für Flüssigkeitseinlass bzw. -auslass verbindbar sind.

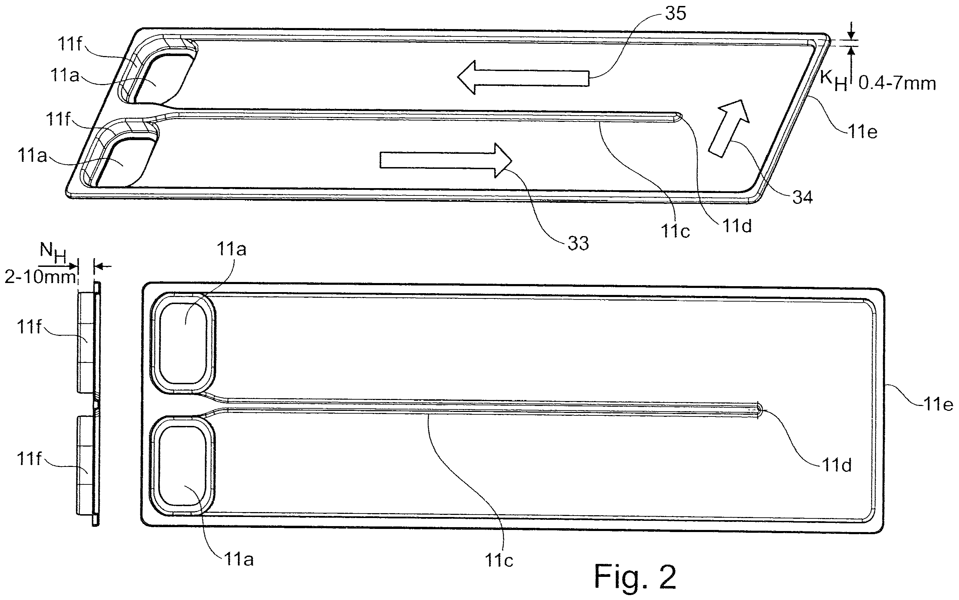

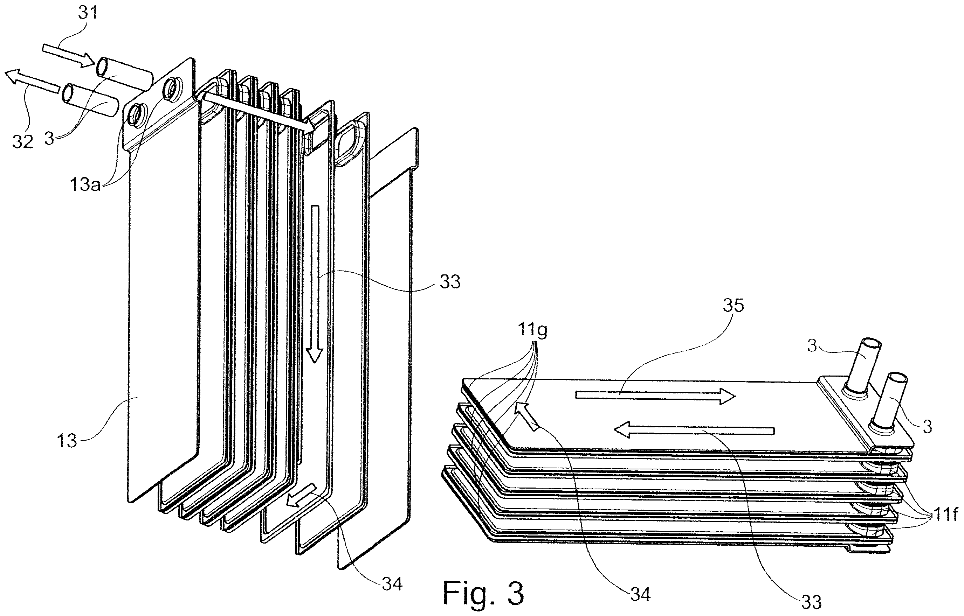

Fig. 2 zeigt eine Scheibe 11 des Heizgeräts 100 von Fig. 1 in einer perspektivischen Schrägansicht und in Aufsicht. In der Mitte der Scheibe 11 ist ein Trennsteg 11c ausgebildet, der von der Mitte zwischen den Durchlassöffnungen 11a ausgeht, mit einem Trennstegende 11d vor dem den Einlassöffnungen 11a gegenüberliegenden Scheibenende 11e. Die Einlassöffnungen 11a sind mit Näpfen 11f, mit einer Höhe N_{H} von vorzugsweise 2 mm bis 10 mm, versehen, welche für eine Verbindung, vorzugsweise Verlötung, benachbart im Heizgerät 100 anzuordnender Scheiben 11 zu einem Scheibenpaar 11g (siehe Fig. 3) vorgesehen sind.

Ein erfindungsgemäßes Heizgerät enthält bevorzugt 2 bis 20 Scheibenpaare 11g. Für eine Beabstandung der Scheibenpaare 11g beim Verbinden, insbesondere Verlöten, gibt es verschiedene technische Lösungsvarianten, die anhand nachfolgender Figuren auch noch genauer erläutert werden:
- Benutzung eines wiederverwendbaren Einlegeteils, beispielsweise aus kohlefaserverstärktem Graphit, das nach der Verbindungsherstellung entnommen wird,
- Beabstandung durch ein dauerhaft mit zu verwendendes, insbesondere zu verlötendes, Einlegeteil,
- Beabstandung durch am Außenrand einer Scheibe 11 dauerhaft angeordnete Beabstandungselemente, beispielsweise ausgebildet als Noppen oder Leisten, die durch Umformung der Scheibe 11 erzeugbar sind.

Ein aus zwei miteinander verbundenen, insbesondere verlöteten, Scheiben 11 erzeugtes Scheibenpaar 11 stellt einen geschlossenen Fluidkanal mit einer Umlenkung des Flüssigkeitsstroms "in der Tiefe" (siehe unten) dar. Die Höhe eines solchen Fluidkanals beträgt bevorzugt etwa 0.8 bis 14 mm.

Der Trennsteg 11c ist vorgesehen, um in einem zwischen den Scheiben 11 zu erzeugenden Flüssigkeitsströmungskanal einströmende Kühlflüssigkeit von einer Einströmungsrichtung 33 am Trennstegende 11d in eine Umlenkrichtung 34 und nachfolgend in eine Ausströmungsrichtung 35 umzulenken, so dass eine Umströmung des Trennstegs 11c, mit anderen Worten "in die Tiefe" zwischen den Scheiben 11, erzeugbar ist.

Fig. 3 zeigt eine Stapelanordnung von zu Scheibenpaaren 11g zusammengefügten Scheiben 11 gemäß Fig. 2 und illustriert die Anordnung benachbarter Scheibenpaare 11g in dem Heizgerät 100 von Fig. 1. Benachbarte Scheibenpaare 11g werden im Betriebszustand parallel zueinander durchströmt, wie durch die Strömungsrichtungspfeile 33, 34 und 35 angedeutet.

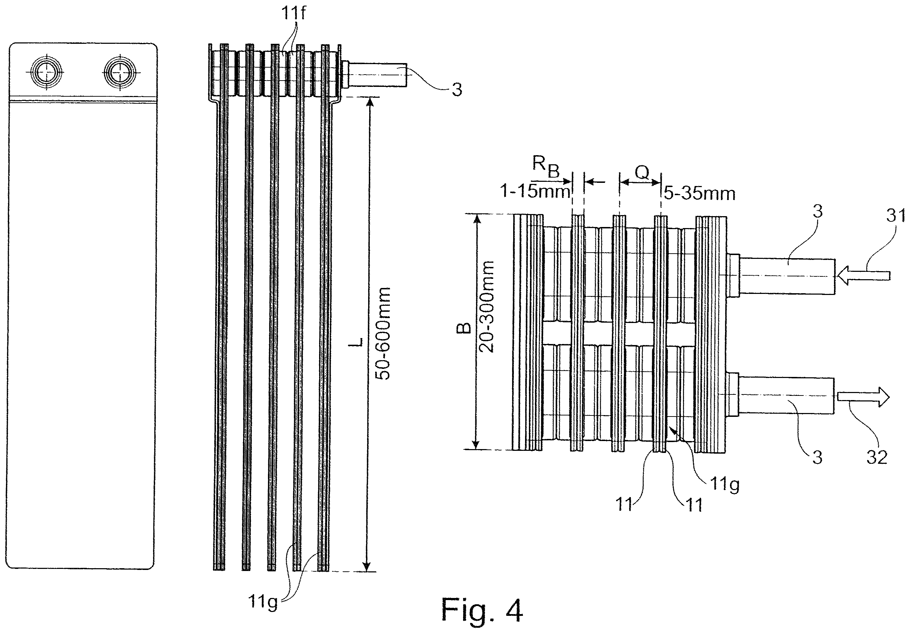

Fig. 4 zeigt eine Anordnung von zu Scheibenpaaren 11g zusammengefügten Scheiben 11 mit gegenseitiger Beabstandung der Scheibenpaare 11g durch bei der Zusammenfügung eingefügte und danach wieder entnommene Einlegeteile, die daher in dieser Darstellung nicht gezeigt sind. Die entnehmbaren und daher wiederverwendbaren Einlegeteile für die Scheibenpaar-Beabstandung beim Schritt der Verbindung, insbesondere Verlötung, der Scheiben 11 zu Scheibenpaaren 11g sind beispielsweise aus kohlefaserverstärktem Graphit (CFC) hergestellt. Vorzugsweise entspricht die Dicke eines solchen wiederverwendbaren Einlegeteils etwa der doppelten Höhe N_{H} eines Napfes 11f. Nach Verbindung der Scheiben 11 zu Scheibenpaaren 11g beträgt die äußere Scheibenpaardicke R_{B} vorzugsweise 1 mm bis 15 mm, bei einer Beabstandung Q zwischen den Scheibenpaarmitten, auch "Querteilung Q" genannt, von vorzugsweise 5 mm bis 35 mm im montierten Zustand. Die Scheiben 11 haben vorzugsweise eine Länge L von 50 mm bis 60 mm und eine Breite von 20 mm bis 300 mm.

Die wiederverwendbaren Einlegeteile dienen zur Kraftübertragung, insbesondere Spannen, beim Verbinden, insbesondere Verlöten, und ermöglichen so eine stabile Verbindung, insbesondere Verlötung, der Scheiben 11 umlaufend zueinander und der Näpfe 11f zueinander. Insbesondere bei Verbindung durch Verlötung ist eine aus zu Scheibenpaaren 11g verlöteten Scheiben 11 und miteinander an den Näpfen 11f verlöteten Scheibenpaaren 11g gebildete Lötgruppe fluidisch dicht und funktionsfähig.

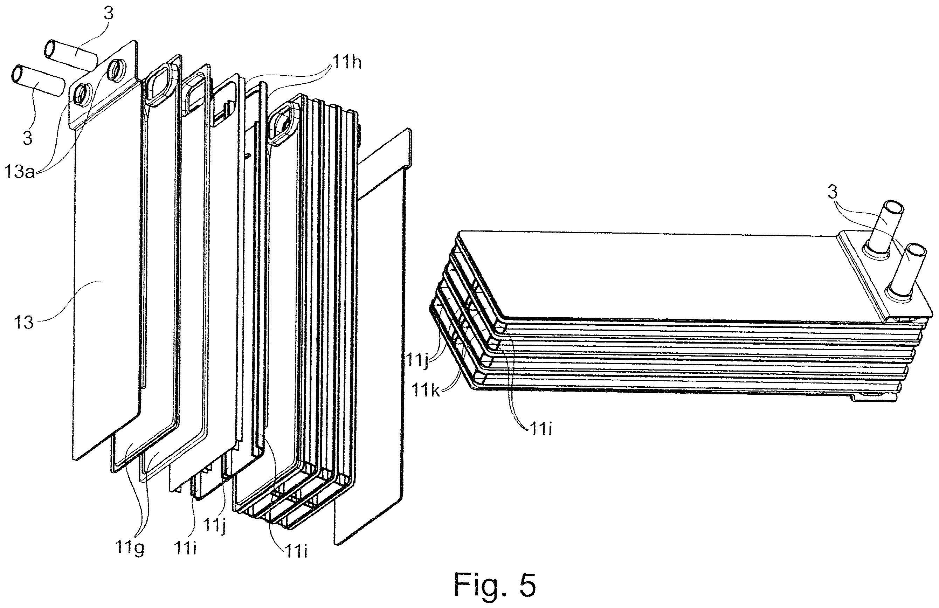

Fig. 5 zeigt eine Stapelanordnung von zu Scheibenpaaren 11g zusammengefügten Scheiben 11 gemäß Fig. 2, mit gegenseitiger Beabstandung durch dauerhaft eingefügte, insbesondere eingelötete, Einlegeteile 11h und illustriert die Anordnung benachbarter Scheibenpaare 11g in dem Heizgerät 100 von Fig. 1.

Die Einlegeteile 11h sind vorzugsweise aus Aluminium gefertigt und geometrisch komplementär, d.h. mit gleicher Längsschnittgeometrie, zu den Scheiben 11 bzw. Scheibenpaaren 11g ausgebildet und weisen in dem dargestellten Beispiel parallel zu den Längsrändern der Scheiben 11 verlaufende schienenartig ausgebildete Beabstandungsrandleisten 11i und eine Beabstandungsmittelleiste 11j auf, so dass nach Verbindung eines Einlegeteils 11h mit einer Scheibe 11 zwei sich parallel zu den Beabstandungsleisten 11i verlaufende Einschubschächte 11k nachfolgend auch als "Bestückungsschächte 11k" bezeichnet, voneinander getrennt durch die Beabstandungsmittelleiste 11j, erzeugbar sind, zur Ermöglichung eines Einschubs von Heizeinheiten des Heizverbunds.

Zusammen mit ihren Beabstandungsleisten 11i, 11j haben die Einlegeteile 11h eine Dicke, welche der Höhe der Scheibennäpfe entspricht, vorzugsweise also von 2 mm bis 10 mm.

Vorzugsweise werden die Einlegeteile 11h an ihren von den Beabstandungsleisten 11i, 11j gebildeten Kontaktflächen zu Scheiben 11 verlötet, wobei verschiedene Einlegeteile 11h nicht miteinander verlötet werden sollen.

Die dauerhaft mit verbundenen Einlegeteile 11h dienen zur Kraftübertragung, insbesondere Spannen, beim Verbinden, insbesondere Verlöten, und ermöglichen so eine stabile Verbindung, insbesondere Verlötung, der Scheiben 11 umlaufend zueinander und der Näpfe 11f zueinander. Insbesondere bei Verbindung durch Verlötung ist eine aus zu Scheibenpaaren 11g verlöteten Scheiben 11 und miteinander an den Näpfen 11f verlöteten Scheibenpaaren 11g sowie einem mitgelöteten Einlegeteil 11h gebildete Lötgruppe fluidisch dicht und funktionsfähig.

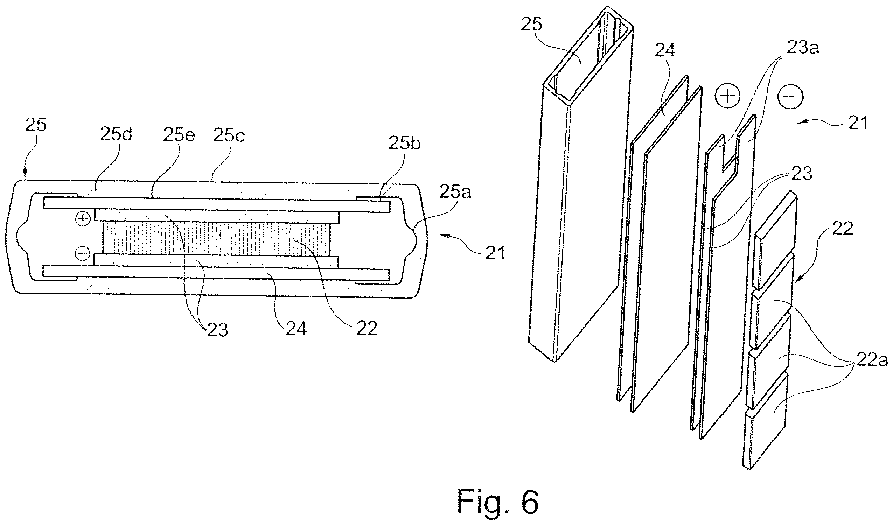

Fig. 6 zeigt in einer Längsschnittdarstellung und einer perspektivischen expandierten Darstellung einen beispielhaften Aufbau von Heizeinheiten 21 eines Heizverbunds 20 für das Heizgerät 100 von Fig.1.

Mittig angeordnet in den Heizeinheiten 21 ist ein Heizelement 22, vorzugsweise eine Vielzahl von PTC-Elementen 22a aufweisend. PTC-Elemente ("Positive Temperature Coefficient"), beispielsweise aus elektrisch leitenden Keramiksubstraten gefertigt, sind stromleitende Materialien, die bei tiefen Temperaturen elektrischen Strom besser leiten als bei hohen Temperaturen; denn ihr elektrischer Widerstand vergrößert sich bei steigender Temperatur. Diese Art von Widerständen besitzt somit einen positiven Temperaturkoeffizienten, mit anderen Worten, die geleitete Stromstärke und somit erzeugte Heizleistung wird mit steigender Temperatur geringer, so dass PTC-Heizelemente selbsttätig "abregulierend" wirken.

Zur Stromversorgung des Heizelements 22 ist gemäß dieses Beispiels das Heizelement 22 längsseitig elektrisch kontaktierend mit zwei Kontaktelektroden 23, beispielsweise aus Buntmetall, die äußere Elektrodenanschlüsse 23a aufweisen, verbunden. Das Heizelement 22 mit den zugeordneten Kontaktelektroden 23 ist in einem, in diesem Beispiel quaderförmig ausgebildeten, Hüllrohr 25 angeordnet, wobei die Kontaktelektroden 23 durch Isolierungselemente 24 zur Innenwand 25e der Wand 25d des Hüllrohrs 25 elektrisch isoliert sind. Die Isolierungselemente 24 sind vorzugsweise aus Keramik oder Silikonfolie und das Hüllrohr aus Aluminium oder Buntmetall, elektrisch potentialfrei, gefertigt.

Die Wand 25d des Hüllrohrs 25 weist des Weiteren Pressbereiche 25c zu Ermöglichung einer Anpressung in Richtung des Heizelements 22, zwecks Verbesserung der Wärmeübertragung, und Knickbereiche 25a sowie Absatzbereiche 25b zum der Isolierungselemente 24 vor einer Biegebeanspruchung auf.

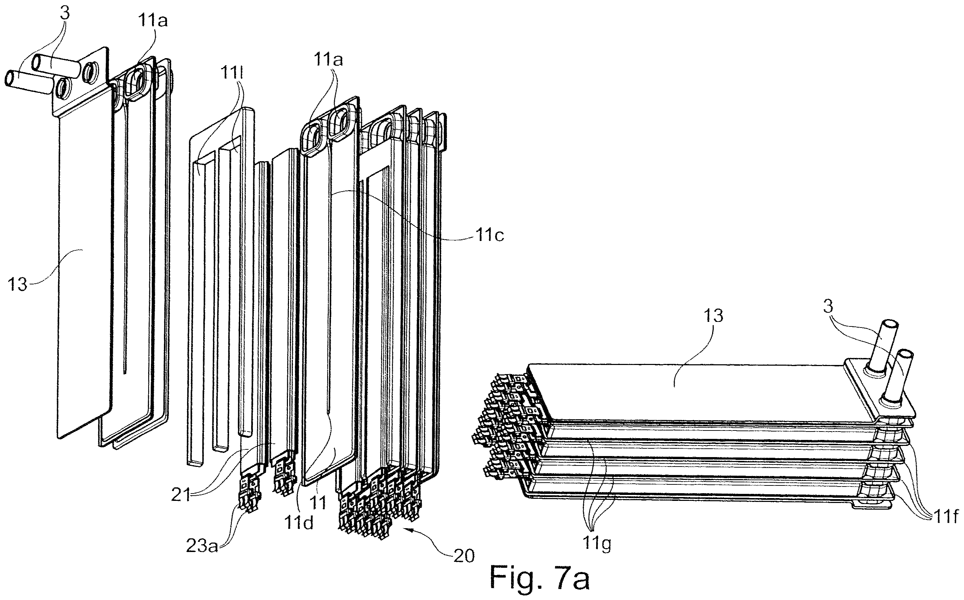

Fig. 7a zeigt in einer Stapelanordnung (rechts) und einer perspektivischen expandierten Darstellung (links) eine Illustration für die Integration eines Heizverbunds 20 gemäß Fig. 6 zwischen Scheibenpaaren 11g, die bei ihrer gegenseitigen Zusammenfügung gemäß einer ersten Vorgehensvariante beabstandet worden sind. Dazu waren zwischen den Scheibenpaaren 11g beim Schritt der Verbindung, insbesondere Verlötung von Scheiben 11 zu Scheibenpaaren 11g zwischen den Scheibenpaaren 11g wiederverwendbare Einlegeteile 11l eingeschoben worden, die nach dem Verbindungsschritt wieder entnommen wurden (siehe auch Fig. 4).

Die Heizeinheiten 21 vorgefertigter Heizverbunde 20 werden, an den offenen Seiten beginnend, zwischen beabstandete Scheibenpaare 21g eingeschoben, wobei die elektrische Kontaktierungsseite des Heizverbunds 20 mit den Elektrodenanschlüssen 23a entgegengesetzt zur Wasseranschlussseite der Scheibenpaare 21, auf der die Scheibenpaare an den Näpfen 21f miteinander verlötet sind, orientiert ist. Zum Einschieben der Heizeinheiten 21 können die Einschuböffnungen erforderlichenfalls geringfügig aufgebogen werden, da die Scheibenpaare ja nur an der entgegengesetzten Seite verbunden sind. Nach dem Einschieben des Heizverbunds 20 mit den Heizeinheiten 21 werden die Scheibenpaare 21g wieder zusammengedrückt.

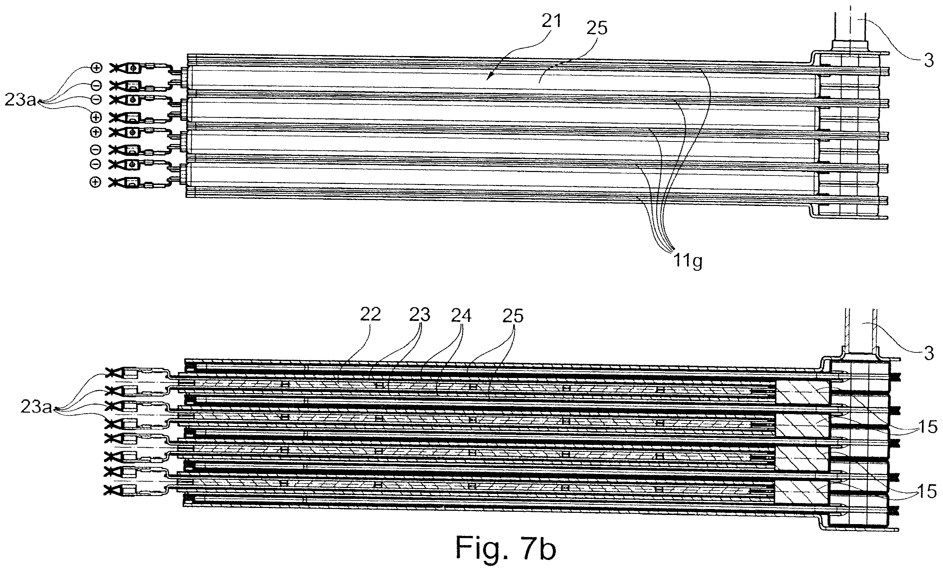

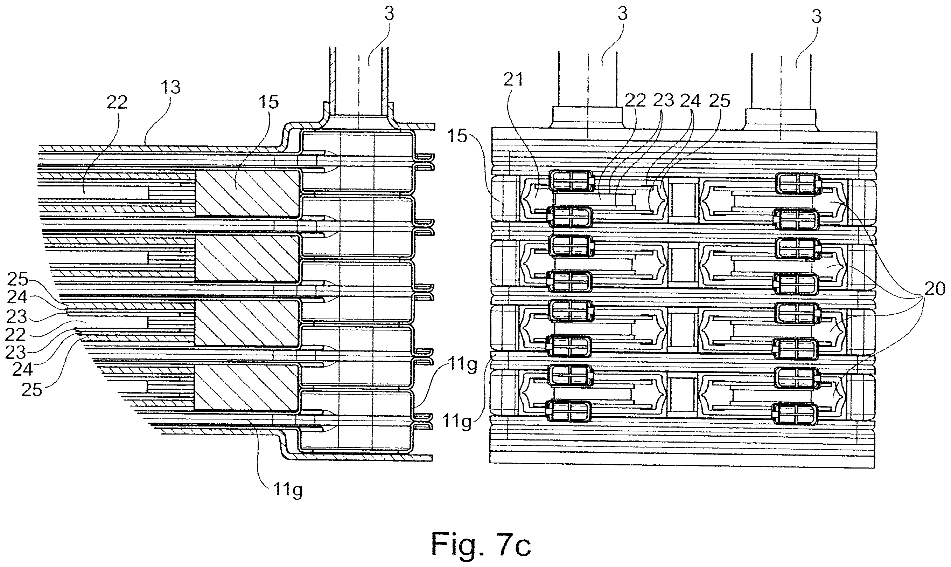

Vorzugsweise wird ein Positionierungsrahmen 15 für die korrekte Positionierung der Heizeinheiten 21 verwendet, der nachträglich eingeschoben oder mit den Scheiben 11 bzw. Scheibenpaaren 11g mitgelötet werden kann (siehe auch Fig. 7b und Fig. 7c).

Im Betriebszustand des Heizgeräts wird die elektrisch erzeugte Wärme von den vorzugsweise im Querschnitt rechteckig ausgebildeten Hüllrohren 25 der Heizeinheiten 21 auf die, insbesondere gelöteten, Scheibenpaare 11g und von dort in das Kühlmittel übertragen.

Fig. 7b zeigt für das Ausführungsbeispiel gemäß Fig. 7a, in einer Aufsicht auf die Längsseite und in einer Schnittdarstellung dazu, in der gleichen Orientierung, die Anordnung der Heizeinheiten 21 mit Hüllrohren 25 zwischen den Scheibenpaaren 11g, in der Längsausdehnung zwischen den Elektrodenanschlüssen 23a auf der linken Figurenseite und der Wasseranschlussseite mit einem Stutzen 3 für Flüssigkeitseinlass oder -auslass auf der rechten Seite. Mit angedeutet sind Teile 15 eines Positionierrahmens, der für eine zielgerichtete Positionierung der Heizeinheiten 21 zwischen den Scheibenpaaren 11g vorgesehen ist.

Fig. 7c zeigt in Detailansichten zu Fig. 7a und Fig. 7b in zueinander senkrecht orientierten Querschnittsansichten eine Illustration für die Integration eines Heizverbunds 20 gemäß Fig. 6 zwischen bei ihrer gegenseitigen Verbindung mit eingefügten und danach wieder entnommenen Einlegeteilen beabstandeten Scheiben 11, gemäß Fig. 4, in einem Heizgerät 100 gemäß Fig. 1.

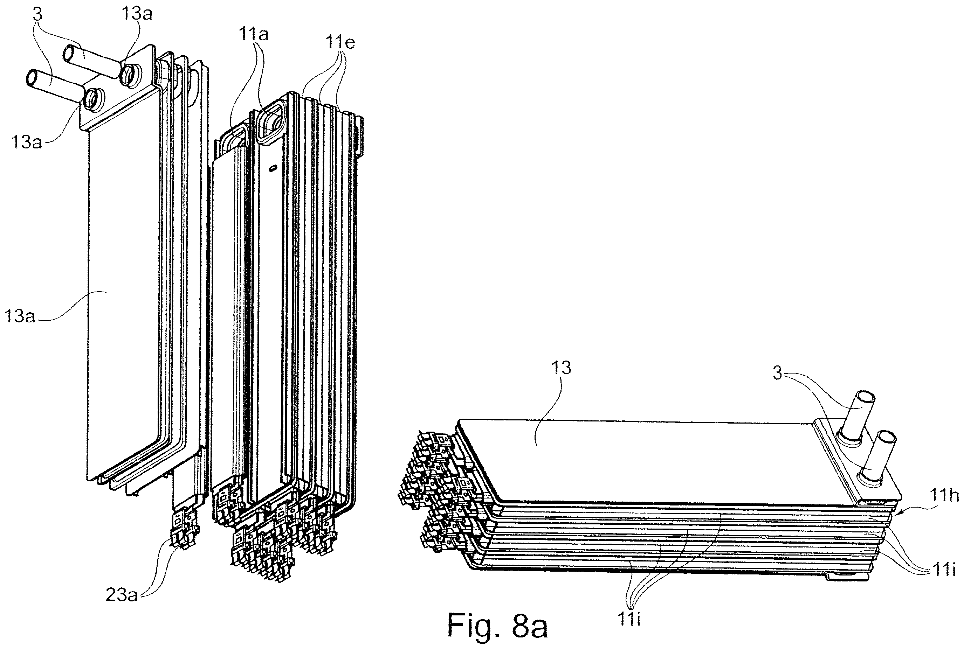

Fig. 8a zeigt in einer Stapelanordnung (rechts) und einer perspektivischen expandierten Darstellung (links) eine Illustration für die Integration eines Heizverbunds 20 mit Heizeinheiten 21 gemäß Fig. 6 zwischen Scheibenpaaren 11g, die bei ihrer gegenseitigen Zusammenfügung gemäß einer zweiten Vorgehensvariante dauerhaft beabstandet worden sind (siehe auch oben, bezüglich Fig. 5). Dazu waren zwischen den Scheibenpaaren 11g beim Schritt der Verbindung, insbesondere Verlötung, von Scheiben 11 zu Scheibenpaaren 11g zwischen den Scheibenpaaren 11g Einlegeteile 11h, vorzugsweise jeweils zwei Beabstandungsrandleisten 11i und eine Mittelbeabstandungsleiste 11j aufweisend, mit Scheiben 11 von Scheibenpaaren 11g zusammengefügt, insbesondere verlötet, worden, so dass Einschubschächte 11k zwischen den Beabstandungsleisten 11i, 11j und den benachbarten Scheiben 11 der Scheibenpaare 11g erzeugt wurden.

Die Heizeinheiten 21 vorgefertigter Heizverbunde 20 werden, an den offenen Seiten beginnend, zwischen beabstandete Scheibenpaare 11g in die Einschubschächte 11k eingeschoben, wobei wiederum die elektrische Kontaktierungsseite des Heizverbunds 20 mit den Elektrodenanschlüssen 23a entgegengesetzt zur Wasseranschlussseite der Scheibenpaare 11g, auf der die Scheibenpaare 11g an den Näpfen 11f miteinander verlötet sind, orientiert ist. Zum Einschieben der Heizeinheiten 21 können auch im Fall dieser Ausführungsvariante die Einschubschächte 11k erforderlichenfalls geringfügig aufgebogen werden, da die Scheibenpaare ja nur an der entgegengesetzten Seite verbunden sind. Nach dem Einschieben des Heizverbunds wird die Lötgruppe gemäß Beschreibung zu Fig. 5 wieder zusammengedrückt.

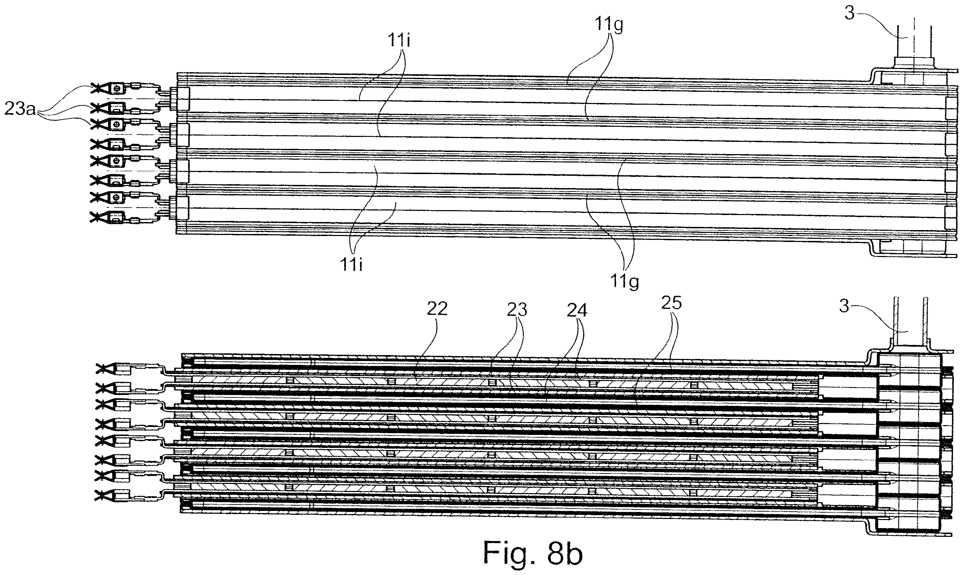

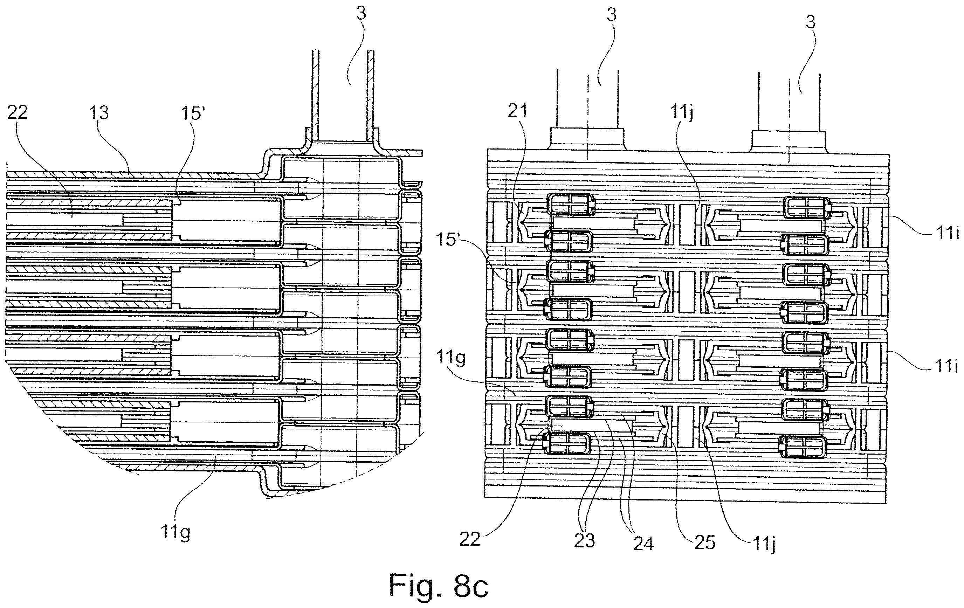

Vorzugsweise wird ein Positionierungsrahmen 15a, insbesondere ausgebildet als ein gegebenenfalls federbelasteter Spannrahmen, für die korrekte Positionierung der Heizeinheiten 21 und für Erzeugung mechanischer Spannung für dauerhafte Kontaktierung der Heizeinheiten 21 des Heizverbunds 20 zu Scheiben 11 der Scheibenpaare 11g verwendet, der nachträglich eingeschoben oder mit den Scheiben 11 bzw. Scheibenpaaren 11g mitgelötet werden kann (siehe auch Fig. 8b und Fig. 8c). Alternativ ist auch eine dauerhafte Kontaktierung zwischen den Heizeinheiten 21 des Heizverbunds 20 und den Scheiben 11 mittels Verklebung, beispielsweise unter Verwendung eines Silikonklebers oder eines Epoxidklebers, möglich.

Fig. 8b zeigt für das Ausführungsbeispiel gemäß Fig. 8a in einer Aufsicht auf die Längsseite und in einer Schnittdarstellung dazu, in der gleichen Orientierung, die Anordnung der Heizeinheiten 21 mit Hüllrohren 25 zwischen den Scheibenpaaren 11g, in der Längsausdehnung zwischen den Elektrodenanschlüssen 23a auf der linken Figurenseite und der Wasseranschlussseite mit dem Stutzen 3 für Flüssigkeitseinlass oder -auslass auf der rechten Seite.

Fig. 8c zeigt in Detailansichten zu Fig. 8a und Fig. 8b in zwei zueinander senkrecht orientierten Querschnittsansichten eine Illustration für die Integration eines Heizverbunds 20 gemäß Fig. 6 zwischen Scheibenpaaren 11g, die bei ihrer gegenseitigen Zusammenfügung dauerhaft beabstandet worden sind, wie vorangehend beschrieben. Mit angedeutet sind Teile 15' eines Positionierrahmens, der für eine zielgerichtete Positionierung der Heizeinheiten 21 zwischen den Scheibenpaaren 11g vorgesehen ist.

Statt der Ausbildung von Heizeinheiten in einem Hüllrohr, können diese auch ohne Hüllrohr angeordnet werden, wobei die Heizeinheiten dann zwischen die dafür vorgesehenen Elemente ggf. mit einer elektrischen Isolation eingebracht werden.

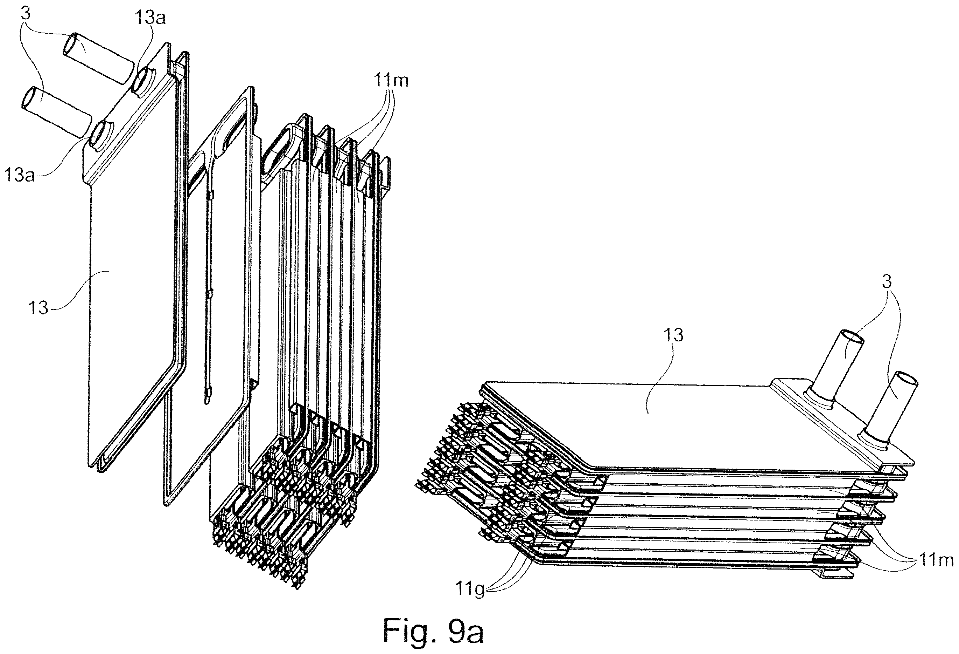

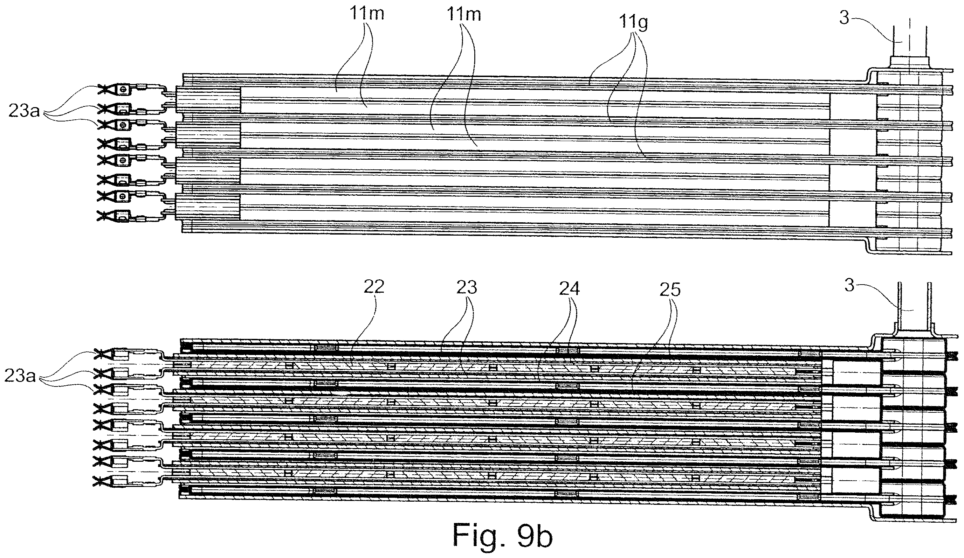

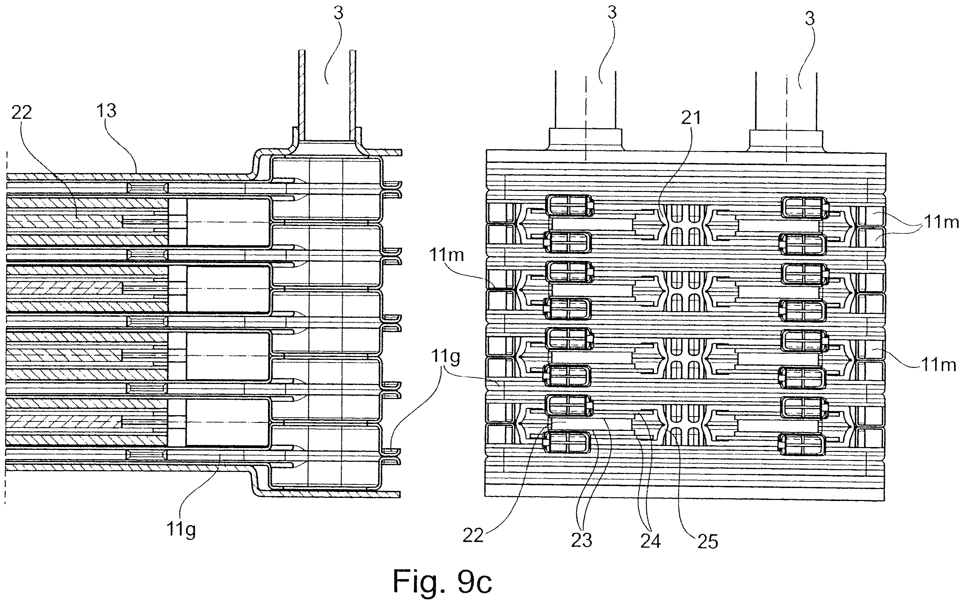

Fig. 9a zeigt in einer Stapelanordnung (rechts) und einer perspektivischen expandierten Darstellung (links) eine Illustration für die Integration eines Heizverbunds 20 gemäß Fig. 6 zwischen Scheibenpaaren 11g, die bei ihrer Zusammenfügung gemäß einer dritten Vorgehensvariante dauerhaft beabstandet worden sind. Dazu sind an den Rändern der voneinander zu beabstandenden Scheiben 11 der Scheibenpaare 11g (integrierte) Beabstandungselemente ausgebildet, die aus Scheiben 11 durch Faltung umgeformt und beispielsweise als (integrierte) Beabstandungsleisten 11m oder Noppen ausgebildet sein können.

Die integrierten Beabstandungselemente 111 dienen zur Kraftübertragung, insbesondere Spannen, beim Verbinden, insbesondere Verlöten, und ermöglichen so eine stabile Verbindung, insbesondere Verlötung, der Scheiben 11 umlaufend zueinander und der Näpfe 11f zueinander. Im Heizgerät benachbart anzuordnende integrierte Beabstandungselemente sind ebenfalls miteinander dauerhaft verbunden, insbesondere verlötet.

Durch die, insbesondere als Beabstandungsleisten 11m oder als Noppen ausgebildeten integrierten Beabstandungselemente werden, zusammenwirkend mit zugeordneten Scheiben 11, starre Einschubschächte, auch als "Bestückungsschächte" bezeichnet, erzeugt.

Die Heizeinheiten 21 vorgefertigter Heizverbunde 20 werden, an den offenen Seiten beginnend, zwischen beabstandete Scheibenpaare 11g in die Einschubschächte eingeschoben, wobei wiederum die elektrische Kontaktierungsseite des Heizverbunds 20 mit den Elektrodenanschlüssen 23a entgegengesetzt zur Wasseranschlussseite der Scheibenpaare 11g, auf der die Scheibenpaare 11g an den Scheibennäpfen miteinander verlötet sind, orientiert ist. Nach dem Einschieben des Heizverbunds 20 mit Heizeinheiten 21 wird die aus zu Scheibenpaaren 11g verlöteten Scheiben 11 mit ihren integrierten Beabstandungselementen 11m und miteinander an den Näpfen verlöteten Scheibenpaaren 11g gebildete Lötgruppe zusammengedrückt.

Vorzugsweise wird ein Positionierungsrahmen, insbesondere ausgebildet als ein gegebenenfalls federbelasteter Spannrahmen, für die korrekte Positionierung der Heizeinheiten 21 und für Erzeugung mechanischer Spannung für dauerhafte Kontaktierung der Heizeinheiten 21 des Heizverbunds 20 zu Scheiben 11 der Scheibenpaare 11g verwendet, der nachträglich eingeschoben oder mit den Scheiben 11 bzw. Scheibenpaaren 11g mitgelötet werden kann (siehe auch Fig. 8a und Fig. 8b). Alternativ ist auch eine dauerhafte Kontaktierung zwischen den Heizeinheiten 21 des Heizverbunds 20 und den Scheiben 11 mittels Verklebung, beispielsweise unter Verwendung eines Silikonklebers oder eines Epoxidklebers, möglich.

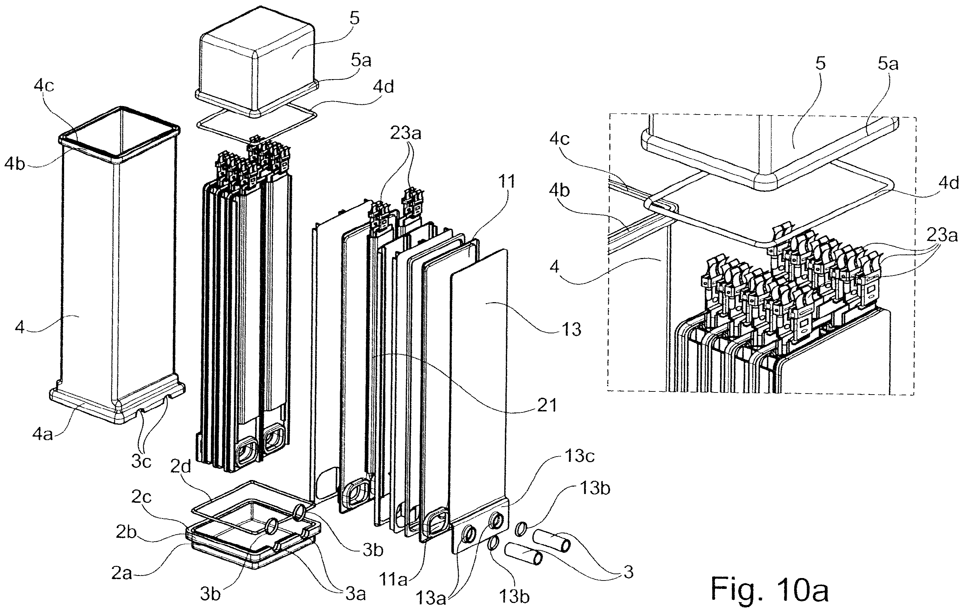

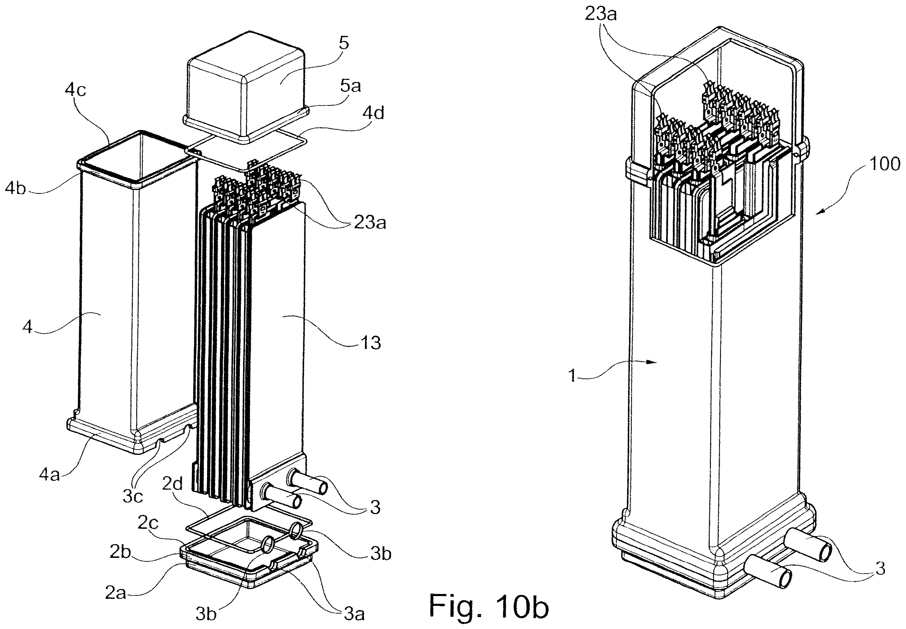

Fig. 10a zeigt in perspektivischen expandierten Ansichten eine Illustration für die Integration von Scheibenpaaren 21g und einem Heizverbund 20 mit Heizeinheiten 21 in einem Gehäuse 1 für Fertigstellung eines Heizgeräts 100 gemäß Fig. 1. In Ergänzung zu Fig. 10a zeigt Fig. 10b in einer expandierten perspektivischen Darstellung und einer teilweise aufgeschnittenen Darstellung eine Illustration für die Integration von Scheibenpaaren 21g und einem Heizverbund 20 mit Heizeinheiten 21 in einem Gehäuse für Fertigstellung eines Heizgeräts 100 gemäß Fig. 1.

Die Heizeinheiten 21 vorgefertigter Heizverbunde 20 werden zwischen Scheibenpaare 11g eingefügt, wie anhand der vorangehenden Ausführungsbeispiele näher erläutert. Scheibenpaare 11g und Heizverbund 20 werden in ein mehrteiliges Gehäuse 1 gemäß Fig. 1 eingeführt. Die verschiedenen Teile des Gehäuses, d.h. Sockelteil 2, Mittelteil 4 und Aufsatz- bzw. Deckelteil 5 werden miteinander, vermittelt über Dichtungselemente 2d, 4d, verbunden. Dadurch wird das Gehäuse 1 nach außen abgedichtet, so dass das Heizgerät 100 staubdicht und fluidisch dicht geschützt ist. Das Aufsatz- bzw. Deckelteil 5 des Gehäuses 1 ist dazu ausgebildet, auch die Leistungselektronik, insbesondere die Elektrodenanschlüsse 23a, aufzunehmen. Vorzugsweise ist ein optionaler Positionierungsrahmen, insbesondere Spannrahmen, wie vorangehend beschrieben, in das Gehäuse 1 integrierbar.

Das erfindungsgemäße Heizgerät zeichnet sich neben anderen Vorteilen dadurch aus, dass der Heizverbund 20 mit den Heizeinheiten 21 und die Komponenten für den Kühlflüssigkeitskreislauf, mit Scheibenpaaren 11g, Seitenteilen 13 etc. unabhängig voneinander, separat hergestellt und vormontiert werden können.

Für alle von außen berührbaren Teile des Heizgeräts ist ein Berührschutz gewährleistet.

Das Heizgerät ist für Hochspannungsbetrieb bis 500 V betriebsfähig und ermöglicht Heizleistungen bis zu mehr als 5 kW, wobei eine nur vergleichsweise geringe Anzahl von Heizelementen erforderlich ist.

Dabei ist das Heizgerät modular aufgebaut, d.h. veränderbar nach gewünschter Heizleistung, und zeichnet sich durch ein vergleichsweise geringes Gewicht aus. Durch die Möglichkeit des Einbaus unterschiedlicher Anzahlen von Scheibenpaaren und gegebenenfalls zusätzlicher Turbulenzeinlagen ermöglicht das erfindungsgemäße Heizgerät eine gezielte Einstellung von flüssigkeitsseitigen Druckabfällen und Strömungsgeschwindigkeiten bei gleichen Außenabmessungen des Heizgeräts.

Aus den vorangehend angeführten Aspekten zusammen hervorgehend, ermöglicht das erfindungsgemäße Heizgerät also von einem Benutzer auswählbare unterschiedliche Leistungsstufen.

Auch kann das Heizgerät als Niederspannungsgerät verwendet werden, bei dem auch ein berührbares Teil auf einem Spannungspotential sein kann, wie auf Massepotential. Auch kann das Heizgerät als Hochspannungsgerät verwendet werden, bei dem jedes berührbare elektrisch leitende Teil elektrisch galvanisch getrennt ist, so dass diese nicht auf Spannungspotential liegen.

### Bezugszeichenliste

- 1: Gehäuse
- 2: Sockelteil
- 2a: Basisteil
- 2b: Verbindungsteil
- 2c: Nut
- 2d: Dichtungselement
- 3: Stutzen für Flüssigkeitseinlass oder -auslass
- 3a: Ausnehmung
- 3b: Durchlassring
- 3c: Ausnehmung
- 4: Mittelteil
- 4a: unteres Endteil des Mittelteils
- 4b: oberes Endteil des Mittelteils
- 4c: Nut
- 4d: Dichtungselement
- 5: Deckelteil
- 5a: unteres Endteil des Deckelteils
- 11: Scheibe
- 11a: Durchlassöffnung
- 11c: Trennsteg
- 11d: Trennstegende
- 11e: Scheibenende
- 11f: Scheibennapf
- 11g: Scheibenpaar 11h Einlegeteil
- 11i: Beabstandungsrandleiste
- 11j: Beabstandungsmittelleiste 11k Einschubschacht
- 11i: wiederverwendbares Einlegeteil
- 11m: integrierte Beabstandungsleiste
- 13: Seitenteil
- 13a: Durchlassöffnung
- 13b: Dichtungselement
- 13c: unteres Endteil des Seitenteils
- 15: Positionierungsrahmen
- 15': Positionierungsrahmen
- 20: Heizverbund
- 21: Heizeinheit
- 22: Heizelement
- 22a: PTC-Element
- 23: Kontaktelektrode
- 23a: Elektrodenanschluss
- 24: Isolation
- 25: Hüllrohr
- 25a: Knickbereich des Hüllrohrs
- 25b: Absatzbereich des Hüllrohrs
- 25c: Pressbereich des Hüllrohrs
- 25d: Wand des Hüllrohrs
- 25e: Innenwand des Hüllrohrs
- 31: Einlassrichtung für Kühlflüssigkeit
- 32: Auslassrichtung für Kühlflüssigkeit
- 33: Einströmungsrichtung
- 34: Umlenkrichtung
- 35: Ausströmungsrichtung
- 100: Heizgerät
- B: Scheibenbreite
- K_{H}: halbe Höhe eines Flüssigkeitsströmungskanals
- L: Scheibenlänge
- N_{H}: Scheibennapfhöhe
- Q: Querteilung, Abstand zwischen Scheibenpaarmitten
- R_{B}: äußere Scheibenpaardicke

## Patentansprüche

1. Elektrisch betreibbares flüssigkeitsdurchströmtes Heizgerät (100) mit einem Gehäuse (1), umfassend eine elektrisch betreibbare Heizvorrichtung und eine Flüssigkeitskammer zur Aufnahme und Durchströmung einer wärmeübertragenden Flüssigkeit, wobei
- die Flüssigkeitskammer eine Vielzahl von Scheibenpaaren (11g) aus miteinander in gegenseitigen vorgegebenen Abständen verbundenen Scheiben (11) aufweist, wodurch Flüssigkeitsströmungskanäle in den Scheibenpaaren (11g) erzeugbar sind, und
- die elektrisch betreibbare Heizvorrichtung als ein Heizverbund (20) mit einer Vielzahl von Heizelementen (22) ausgebildet ist, wobei der Heizverbund (20) derart zwischen den Flüssigkeitskammern anordenbar ist durch Einführung der Heizeinheiten (21) in die zwischen den Scheibenpaaren (11g) erzeugten Aufnahmeräumen,
- wobei die Heizeinheiten (21) und die Flüssigkeitsströmungskanäle gegeneinander fluidisch dichtend und elektrisch isoliert sind
- und wobei die Scheiben (11) eine Einlassöffnung (11a) und eine Auslassöffnung (11a) zur Ermöglichung einer Einströmung von wärmeübertragender Flüssigkeit in die Flüssigkeitskanäle aufweisen,
**dadurch gekennzeichnet, dass**
die Scheiben einen von der Einlassöffnung und der Ausfassöffnung ausgehenden Trennsteg aufweisen, mit einem Ende des Trennstegs, an dem durchströmende wärmeübertragende Flüssigkeit von einer Einströmungsrichtung in eine Ausströmungsrichtung umleitbar ist.

2. Elektrisch betreibbares flüssigkeitsdurchströmtes Heizgerät nach Anspruch 1, **dadurch gekennzeichnet, dass** jeweils zwei Scheiben (11) eines Scheibenpaars (11g) miteinander verlötet sind.

3. Elektrisch betreibbares flüssigkeitsdurchströmtes Heizgerät nach Anspruch 1 oder 2, **dadurch gekennzeichnet, dass** die Heizeinheiten (21) in einem Hüllrohr (25) angeordnet sind und mittig zwischen zwei Kontaktelektroden (23) angeordnete PTC-Elemente (22a) aufweisen, wobei vorzugsweise zwischen zumindest einer Kontaktelektrode (23) und dem Hüllrohr (25) zumindest eine elektrische Isolation (24) vorgesehen ist.

4. Elektrisch betreibbares flüssigkeitsdurchströmtes Heizgerät nach einem der vorhergehenden Ansprüche, **dadurch gekennzeichnet, dass** die Heizeinheiten (21) mittig zwischen zwei Kontaktelektroden (23) angeordnete PTC-Elemente (22a) aufweisen, wobei vorzugsweise zumindest eine der Kontaktelektroden (23) eine elektrische Isolation (24) aufweist zur Isolation gegenüber dem Aufnahmeraum zur Aufnahme der Heizeinheit.

5. Elektrisch betreibbares flüssigkeitsdurchströmtes Heizgerät nach einem der vorhergehenden Ansprüche, **dadurch gekennzeichnet, dass** das Gehäuse (1) aus mehreren Gehäuseteilen (2, 2a, 2b, 4, 4a, 4b, 5, 5a) aufgebaut ist, die über Dichtungselemente (2d, 3b, 4d) staubdichtend und fluidisch dichtend miteinander verbindbar sind.

6. Elektrisch betreibbares flüssigkeitsdurchströmtes Heizgerät nach einem der Ansprüche 1 bis 4, **dadurch gekennzeichnet, dass** die Scheiben (11) in Bereichen der Einlass- und Auslassöffnungen (11a) Scheibennäpfe (11f) aufweisen, mittels derer in dem Heizgerät benachbart angeordnete Scheiben (11) verschiedener Scheibenpaare (11g) gegeneinander beabstandet sind.

7. Elektrisch betreibbares flüssigkeitsdurchströmtes Heizgerät nach einem der vorhergehenden Ansprüche, **dadurch gekennzeichnet, dass** in dem Heizgerät benachbart angeordnete Scheiben (11) verschiedener Scheibenpaare (11g) durch mit den Scheiben (11) dauerhaft verbundene, insbesondere zu den Scheiben (11) verlötete, Einlegeteile (11h) gegeneinander beabstandet sind.

8. Elektrisch betreibbares flüssigkeitsdurchströmtes Heizgerät nach Anspruch 6, **dadurch gekennzeichnet, dass** ein mit Scheiben (11) verbundenes, insbesondere verlötetes, Einlegeteil (11h) zwei Beabstandungsrandleisten (11i) und vorzugsweise eine Mittelbeabstandungsleiste (11j) aufweist, an denen diese mit Scheiben (11) von Scheibenpaaren (11g) zusammengefügt, insbesondere verlötet worden sind, so dass Einschubschächte (11k) zwischen den Beabstandungsleisten (11i; 11j) und den benachbarten Scheiben (11) der Scheibenpaare (11g) erzeugt sind.

9. Elektrisch betreibbares flüssigkeitsdurchströmtes Heizgerät nach einem der Ansprüche 1 bis 5, **dadurch gekennzeichnet, dass** in dem Heizgerät benachbart angeordnete Scheiben (11) verschiedener Scheibenpaare (11g) durch mit den Scheiben (11) integrierte Beabstandungselemente, die aus Scheiben (11) durch Faltung umgeformt und, insbesondere, als Beabstandungsleisten (11m) oder Noppen ausgebildet sind, beabstandet sind.

## Claims

1. An electrically operable heating device (100), through which liquid is passed, having a housing (1), comprising an electrically operable heating apparatus and a liquid chamber for the accommodation and throughflow of a heat-transferring liquid, wherein
- the liquid chamber has a plurality of plate pairs (11g) consisting of plates (11) connected to one another at predefined distances from one another, whereby liquid flow channels can be produced in the plate pairs (11g), and
- the electrically operable heating device is formed as a heating composite (20) having a plurality of heating elements (22), wherein the heating composite (20) can be arranged in such a way between the liquid chambers by inserting the heating units (21) into the accommodating spaces produced between the plate pairs (11g),
- wherein the heating units (21) and the liquid flow channels are sealed in a fluid-tight manner and are electrically insulated with respect to one another,
- and wherein the plates (11) have an inlet opening (11a) and an outlet opening (11a) in order to allow heat-transferring liquid to flow into the liquid channels,
**characterised in that**
the plates have a separating web starting from the inlet opening and the outlet opening, with an end of the separating web at which heat-transferring liquid flowing through can be diverted from an inflow direction into an outflow direction.

2. The electrically operable heating device, through which liquid is passed, as claimed in claim 1, **characterised in that** each two plates (11) forming a plate pair (11g) are soldered to one another.

3. The electrically operable heating device, through which liquid is passed, as claimed in claim 1 or 2, **characterised in that** the heating units (21) are arranged in a sheathing (25) and have PTC elements (22a) arranged centrally between two contact electrodes (23), wherein at least one electrical insulation (24) is preferably provided between at least one contact electrode (23) and the sheathing (25).

4. The electrically operable heating device, through which liquid is passed, as claimed in one of the preceding claims, **characterised in that** the heating units (21) have PTC elements (22a) arranged centrally between two contact electrodes (23), wherein at least one of the contact electrodes (23) preferably has an electrical insulation (24) for insulating with respect to the accommodating space for accommodating the heating unit.

5. The electrically operable heating device, through which liquid is passed, as claimed in one of the preceding claims, **characterised in that** the housing (1) is constructed of a number of housing parts (2, 2a, 2b, 4, 4a, 4b, 5, 5a), which can be interconnected in a dust-tight and fluid-tight manner via seal elements (2d, 3b, 4d).

6. The electrically operable heating device, through which liquid is passed, as claimed in one of claims 1 to 4, **characterised in that** the plates (11), in regions of the inlet and outlet openings (11a), have plate dishes (llf), by means of which the plates (11), arranged adjacently in the heating device, of different plate pairs (11g) are distanced from one another.

7. The electrically operable heating device, through which liquid is passed, as claimed in one of the preceding claims, **characterised in that** plates (11) of different plate pairs (11g) arranged adjacently in the heating device are distanced from one another by insert parts (11h) connected permanently to the plates (11), in particular soldered to the plates (11).

8. The electrically operable heating device, through which liquid is passed, as claimed in claim 6, **characterised in that** an insert part (llh) connected, in particular soldered, to plates (11) has two spacing edge bars (11i) and preferably one middle spacing bar (11j), at which said insert part has been joined, in particular soldered, to plates (11) of plate pairs (11g), such that insertion compartments (11k) are produced between the spacing bars (lli; 11j) and the adjacent plates (11) of the plate pairs (11g).

9. The electrically operable heating device, through which liquid is passed, as claimed in one of claims 1 to 5, **characterised in that** plates (11), arranged adjacently in the heating device, of different plate pairs (11g) are distanced by means of spacing elements, which are integrated with the plates (11), are deformed from plates (11) by folding and in particular are formed as spacing bars (11m) or nubs.

## Revendications

1. Appareil de chauffage (100) - doté d'un boîtier (1) - fonctionnant électriquement et traversé par un liquide, ledit appareil de chauffage comprenant un dispositif de chauffage fonctionnant électriquement et une chambre de liquide prévue pour la réception et la circulation d'un liquide transmettant de la chaleur, où
- la chambre de liquide présente une multiplicité de paires de plaques (11g) se composant de plaques (11) assemblées les unes aux autres, à des distances prédéfinies les unes par rapport aux autres, grâce à quoi des conduits d'écoulement de liquide peuvent être produits dans les paires de plaques (11g), et
- le dispositif de chauffage fonctionnant électriquement est conçu comme un ensemble mixte de chauffage (20) comportant une multiplicité d'éléments chauffants (22), où l'ensemble mixte de chauffage (20) peut être agencé entre les chambres de liquide, d'une manière qui permette l'introduction des ensembles chauffants (21) dans les espaces de logement fournis entre les paires de plaques (11g),
- où les ensembles chauffants (21) et les conduits d'écoulement de liquide sont fluidiquement étanches et isolés électriquement les uns par rapport aux autres, et
- où les plaques (11) présentent une ouverture d'entrée (11a) et une ouverture de sortie (11a), pour permettre à un liquide transmettant de la chaleur d'entrer dans les conduits de liquide,
**caractérisé**
**en ce que** les plaques présentent une barrette de séparation partant de l'ouverture d'entrée et de l'ouverture de sortie, ladite barrette de séparation ayant une extrémité au niveau de laquelle un liquide en circulation et transmettant de la chaleur peut être dévié, passant d'une direction de flux entrant à une direction de flux sortant.

2. Appareil de chauffage fonctionnant électriquement et traversé par un liquide selon la revendication 1, **caractérisé en ce que** deux plaques (11) d'une paire de plaques (11g) sont à chaque fois brasées l'une avec l'autre.

3. Appareil de chauffage fonctionnant électriquement et traversé par un liquide selon la revendication 1 ou 2, **caractérisé en ce que** les ensembles chauffants (21) sont disposés dans un tube de gainage (25) et présentent des éléments CTP (22a) disposés au milieu entre deux électrodes de contact (23), où il est prévu au moins une isolation électrique (24), de préférence entre au moins une électrode de contact (23) et le tube de gainage (25).

4. Appareil de chauffage fonctionnant électriquement et traversé par un liquide selon l'une quelconque des revendications précédentes, **caractérisé en ce que** les ensembles chauffants (21) présentent des éléments CTP (22a) disposés au milieu entre deux électrodes de contact (23), où de préférence au moins l'une des électrodes de contact (23) présente une isolation électrique (24) servant à l'isolation par rapport à l'espace de logement prévu pour recevoir l'ensemble chauffant.

5. Appareil de chauffage fonctionnant électriquement et traversé par un liquide selon l'une quelconque des revendications précédentes, **caractérisé en ce que** le boîtier (1) est constitué de plusieurs parties de boîtier (2, 2a, 2b, 4, 4a, 4b, 5, 5a) qui peuvent être assemblées les unes aux autres, par des éléments d'étanchéité (2d, 3b, 4d), en étant étanches à la poussière et fluidiquement étanches.

6. Appareil de chauffage fonctionnant électriquement et traversé par un liquide selon l'une quelconque des revendications 1 à 4, **caractérisé en ce que** les plaques (11) présentent, dans des zones des ouvertures d'entrée et de sortie (11a), des cuvettes de plaques (11f) au moyen desquelles des plaques (11) de différentes paires de plaques (11g), disposées de façon adjacente dans l'appareil de chauffage, sont espacées les unes des autres.

7. Appareil de chauffage fonctionnant électriquement et traversé par un liquide selon l'une quelconque des revendications précédentes, **caractérisé en ce que** des plaques (11) de différentes paires de plaques (11g), disposées de façon adjacente dans l'appareil de chauffage, sont espacées les unes des autres par des pièces d'insertion (11h) assemblées de façon permanente avec les plaques (11), en particulier brasées avec les plaques (11).

8. Appareil de chauffage fonctionnant électriquement et traversé par un liquide selon la revendication 6, **caractérisé en ce qu'**une pièce d'insertion (11h) assemblée, en particulier, brasée avec des plaques (11), présente deux bordures d'espacement (11i) et, de préférence, une bordure d'espacement centrale (11j), sur lesquelles ces pièces d'insertion ont été assemblées, en particulier brasées, avec des plaques (11) de paires de plaques (11g), de sorte que des baies d'insertion (11k) sont produites entre les bordures d'espacement (11i ; 11j) et les plaques adjacentes (11) des paires de plaques (11g).

9. Appareil de chauffage fonctionnant électriquement et traversé par un liquide selon l'une quelconque des revendications 1 à 5, **caractérisé en ce que** des plaques (11) de différentes paires de plaques (11g), disposées de façon adjacente dans l'appareil de chauffage, sont espacées par des éléments d'espacement intégrés dans les plaques (11), éléments d'espacement qui sont formés par pliage à partir de plaques (11), et sont configurés, en particulier, comme des rebords d'espacement (11m) ou comme des protubérances.
